# EUROPEAN PATENT APPLICATION

(11) **EP 2 336 094 A1**
(43) Date of publication of application: **22.06.2011**
(21) Application number: 09180121.7
(22) Date of filing: 21.12.2009
(51) Int. Cl.: C04B 24/26, C08G 81/02, C08L 71/02

(54) **"Superplasticizers for concrete and cement materials and process for producing the same"**

(71) Applicant: Mapei S.p.A., 20158 Milano (IT)
(72) Inventor: Gamba, Mariele, 20158, MILANO (IT); Clemente, Paolo, 20158, MILANO (IT); Alampi, Giuseppe, 20158, MILANO (IT); Surico, Francesco, 20158, MILANO (IT); Badessso, Lino, 20158, MILANO (IT); Ferrari, Giorgio, 20158, MILANO (IT); Squinzi, Marco, 20158, MILANO (IT)
(74) Representative: Minoja, Fabrizio

(57) **Abstract**

Superplasticizer for concrete and other cement mixtures, which is intrinsically low-foaming, promotes the early mechanical strength development and retains the workability of fresh concrete for longer time, obtainable by reacting acid, not neutralized, polycarboxylic polymers with monofunctional polyethers and difunctional polyethers in the absence of strong acidic catalysts.

## Description

The invention relates to superplasticizers for concrete and cement materials which are characterized by outstanding water reduction capability, intrinsic antifoaming effect and improved retention of the workability of fresh concrete mixtures. The superplasticizers of the invention further promote the hydration of cement and the early development of mechanical strength of concrete. The invention also relates to the process for producing said superplasticizers and to cement compositions containing the same.

### Background of the invention

Nowadays superplasticizers are essential components in cement mixtures because they allow the production of concrete and other cement materials characterized by superior performances. The addition of superplasticizers reduces the water to cement ratio (w/c) and improve the overall characteristics of concrete and other cement mixtures, such as mechanical strength, shrinkage and the durability.

The first developed superplasticizers were based on the condensation between formaldehyde and naphthalene sulfonic acid salts (NSFC) or melamine sulphite modified resins (MSFC), such those described in US 2052586 and DE 1745441. More recently, polymers obtained by the copolymerization of (meth)acrylic acids, maleic anhydride, maleic acids or their salts with polyoxyethylene (meth)acrylic esters or adducts of polyethylene derivatives to vinyl monomers have been developed. These superplasticizers became increasingly popular due to their higher efficiency in reducing w/c in comparison with the previous generation superplasticizers and are commonly known as "acrylic superplasticizers", "vinyl superplasticizers" and "polycarboxylates superplasticizers" according to the type of monomers used for their production.

The first example of such superplasticizers has been claimed in Japanese Patent JP 58-74552. In this patent, copolymers obtained by free radical copolymerization of (meth)acrylic acid or their salts and methoxypolyethylene (meth)acrylic ester have been claimed as water reducing agents for concrete and cement compositions. These polymers are highly effective in reducing w/c but cause, as a drawback, the introduction of excessively high amount of air bubbles during the production of concrete mixes, which reduce the mechanical strength and cause the worsening of the appearance of the surface of hardened concrete. For this reasons, it is necessary to formulate these superplasticizers with defoaming agents in order to reduce the amount of entrained air. Nevertheless, most of the defoaming agents are not soluble in water and tend to separate and float at the top of the superplasticizer solution, thus reducing their efficiency and the shelf life of the product. In order to overcome these disadvantages, it is necessary to provide the storage tanks of superplasticizers at the jobsite with mechanical or pneumatic mixing systems to keep the defoaming agents homogeneously dispersed in the superplasticizer solution.

EP 0612702 claims superplasticizers with reduced air entrainment. These copolymers are produced by free radical terpolymerization of the following monomers: a) (meth)acrylic acid and its salts, b) polyetyleneglycolmonomethylether-(meth)acrylate with molecular weight in the range from 200 to 2,000 and c) polypropyleneglycol-di(meth)acrylate with molecular weight in the range from 280 to 3,100. Beside the low air entraining effect, these superplasticizers are also characterized by good water reduction capability and workability retention.

EP 1547986 claims superplasticizers produced by free radical terpolymerization of the following three groups of monomers: a) (meth)acrylic acid and its salts, b) polyetyleneglycolmonomethylether-(meth)acrylate with molecular weight up to 13,200 and c) polypropyleneglycol-di(meth)acrylate with molecular weight in the range from 280 to 11,800. These superplasticizers, beside low air entraining effect and good water reduction capability, also promote the hydration of cement and the development of high early mechanical strength. Due to these characteristics, it is possible to cast concrete mixtures characterized by high fluidity and very low mixing water, which set quickly even in cold climates and winter time, when the low temperature slows the hydration reaction of cement. Furthermore, with these superplasticizers it is possible to reduce the temperature and/or the time of steam curing in precast concrete plants, with significant benefits in terms of energy saving and increase of the productivity. On the other side, these superplasticizers are characterized by a rather low retention of the workability and, after 30 minutes from mixing, they may loose most of the initial fluidity; in these cases, it is necessary to retemper the concrete with an extra-dosage of superplasticizer or, in the worse cases, with further addition of water in order to restore the initial slump value.

Superplasticizers with improved slump retention have been claimed in EP 88980. These superplasticizers are produced by reaction of carboxylic acid polymers with polyethers, catalyzed by strong protic acids with pKa value lower than 0. According to the teachings of this patent, preferred strong protic acids include arylsulfonic acids, alkylsulfonic acids and sulfonic acid ion exchange resins. Inorganic as well organic acids may be used; the acid may be soluble or insoluble in the reaction mixture. Other suitable acids are hydrogen halides, halosulfonic acids, tetrafluoroboric acid, heteropolyacids and sulfuric acid. Mixtures of the aforementioned different acid can be used. The protic acid may be added also in salt form (e.g. zinc triflate), such that the acid is generated "in situ" by interaction with the carboxylic acid polymer. The function of the protic acid catalyst is essential to activate and promote a combination of desired cleavage and esterification reactions of the polyethers moieties. According to the teachings of EP 88980, the cleavage of some, but not all, of the ether linkages of the polyethers by the strong protic acid is essential, because the resulting cleavage products ultimately participate in the desired esterification of the carboxylic groups present in the polymer. Anyway, the disadvantage of the process claimed in EP 88980 is that the reaction conditions must be carefully controlled in order to avoid excessive and unwanted cleavage and crosslinking of the resulting polymers, which tends to reduce the solubility in water of the product derived therefrom and to produce the gelling of the reaction products.

More recently, US Patent 7375163 describes novel superplasticizers very effective in reducing the drop in fluidity of fresh cement mixtures. These superplasticizers are based on polymers comprising side chains connected to the backbone of said polymer by ester and optionally amide and/or imide groups. Such superplasticizers can be produced by acid catalyzed (sulfuric acid) esterification, with or without amidation and/or imidation reactions, of a polycarboxylic acid with polyoxyalkylene-based moieties. Polymers produced according to the above mentioned process impart good retention of the workability to fresh concrete mixtures but suffer of excessive air entrainment and need to be formulated with external defoamers based on tributhyl phosphate.

### SUMMARY OF THE INVENTION

The present invention provides new superplasticizers which overcome the drawbacks of the aforementioned processes and are superior in comparison with the previously known superplasticizers because they are intrinsically non-foaming, retain the workability of fresh concrete for longer time and promote the early mechanical strength development.

### DESCRIPTION OF THE INVENTION

The superplasticizers of the invention are obtained by reacting polycarboxylic acid polymers with monofunctional polyethers and difunctional polyethers. The production of the superplasticizers of the invention involves the esterification of the carboxylic groups of the polycarboxylic polymers with the hydroxyl functions of mono and difunctional polyethers. By this reaction, both monofunctional and difunctional polyethers are connected to the backbone of the polycarboxylic polymers as side chains and difunctional polyethers can optionally act as crosslinking agents.

It has been surprisingly found that the esterification reaction of the polycarboxylic acid polymers with the monofunctional and difunctional polyethers proceeds smoothly and in high yields without using strong acidic catalyst, as reported in EP 88980 and US 7375163, provided that all the carboxylic groups of the polycarboxylic acid polymers are in the acidic, not neutralized form. In fact, if the polycarboxylic acid polymers are completely or only partially neutralized with bases such as, for example, sodium, potassium, ammonium hydroxide, unwanted increases of the viscosity during the esterification reaction with the polyethers will occur, with a corresponding decrease of the overall performances of the superplasticizers.

The superplasticizers of the invention are also remarkably superior in promoting mechanical strength development in comparison with those produced according to EP 1547986 by free radical terpolymerization of monomers based on a) (meth)acrylic acid and its salts, b) polyetyleneglycolmonomethylether-(meth)acrylate and c) polypropyleneglycol-di(meth)acrylate.

Furthermore, they show also better performances, in terms of water reduction capability and retention of the workability, in comparison with those described in EP 88980 and US 7375163, where polycarboxylic acid polymers are reacted with polyethers in the presence of strong acidic catalysts.

The invention also provides cement compositions comprising cement, aggregates and the superplasticizer of the invention.

### Detailed description of the invention

Polycarboxylic acid polymers can preferably be obtained by polymerization of acrylic acid and methacrylic acid or their mixtures, optionally in combination with other monomers capable to react with acrylic and methacrylic acid. Typical examples of such monomers are maleic anhydride, maleic acid, styrene, vinyl sulfonic acid, 2-acrylamido-2-methyl-1-propanesulfonic acid (AMPS) and vinyl acetate.

The polycarboxylic acid polymers can be obtained starting from the aforementioned monomers, according the conventional methods of polymerization, by solution or bulk polymerization. In the case of solution polymerization, solvent which can conveniently be used include water, alcohols such as methyl alcohol, ethyl alcohol and isopropyl alcohol, glycols, glycolethers, polyglycolethers, polyethers and polyoxyalkylene derivatives, aromatic or aliphatic hydrocarbons such as benzene, toluene, xylene, cyclohexane and n-hexane, ester compounds, such as ethyl acetate, ketone compounds such as acetone and methyl ethyl ketone and cyclic ethers such as tetrahydrofuran and dioxane. Preferred solvents are water, methoxypolyethyleneglyocols, polypropyleneglycols and their mixtures.

Examples of polymerization initiators which can be conveniently used in aqueous and other protic and hydrophilic solutions include persulfate salts such as ammonium persulfate, sodium persulfate and potassium persulfate; hydrogen peroxide, aqueous azo-intiators such as 2,2'-azobis(2-amidinopropane) dihydrochloride and 2,2'-azobis(2-methylpropionamide)dehydrate. Polymerization accelerators can be simultaneously used with the polymerization initiators. Examples of suitable accelerators include: alkali metal hydrogensulfites such as sodium hydrogensulfite, sodium metabisulfite, sodium hypophosphite, Fe (II) salts such as Mohr's salts, sodium hydroxymethanesulfite dehydrate, hydroxylamine hydrochloride, thiourea, L-ascorbic acid (salt) and isoascorbic acid (salt).

In addition, when carrying out the solution polymerization in solvents such as aromatic or aliphatic hydrocarbons, esters and ketones, radical polymerization initiators such as peroxides (for example, benzoyl peroxide, lauroyl peroxide and sodium peroxide), hydroperoxides (for example, t-butyl hydroperoxide and cumene hydroperoxide) and azo compounds (for example, azobisisobutyronitrile) can be conveniently used.

The bulk polymerization can be carried out with radical polymerization initiators such as peroxides (for example, benzoyl peroxide, lauroyl peroxide and sodium peroxide), hydroperoxides (for example, t-butyl hydroperoxide and cumene hydroperoxide) and azo compounds (for example, azobisisobutyrronitrile).

The reaction temperature for the polymerization of the polycarboxylic acid polymers is not especially limited and it is related to the particular type or system of initiator used. Accordingly, the reaction temperature is in the range of 30 to 90°C. For example, when persulfate salt is used as an initiator, the polymerization temperature is in the range of 40 to 90°C, preferably 50 to 85°C, more preferably 60 to 80°C. In addition, when the combination of hydrogen peroxide and L-ascorbic acid (salt) as a promoter is used as an initiator, the reaction temperature is in the range of 30 to 90°C, preferably 35 to 85°C, more preferably 40 to 80°C.

The polymerization time is not especially limited, ranging from 0.5 to 10 hours, preferably 0.5 to 8 hours, more preferably from 1 to 6 hours.

In order to control the molecular weight of the polycarboxylic acid polymers of the invention, chain transfer agents such as 2-mercaptoethanol, mercaptoacetic acid, mercaptopropionic acid, alkylmercaptans and their mixtures can be conveniently used. It is preferable that the polycarboxylic acid polymers have a weight-average molecular weight of 400 to 40,000, preferably 1000 to 20,000, more preferably 1000 to 15,000 Dalton (in terms of polyethylene glycol or polysaccharide standards as determined by gel permeation chromatography).

Useful polyethers to be esterified with the polycarboxylic acid are those containing one or more terminal hydroxyl groups, particularly monofunctional and difunctional polyethers, such as polyoxyethylene derivatives, polyoxypropylene derivatives and copolymers between ethylene oxide and propylene oxide.

Among monofunctional polyoxyethylene derivatives, polyetyleneglycolmonomethylethers of molecular weight in the range from about 2000 to about 13,200 Dalton are most preferred, corresponding to the following formula

CH₃-(CH₂-CH₂-O)ₙ-H

where n is an integer between 8 and 300.

Among difunctional polyoxypropylene derivatives, polyoxypropyleneglycols of molecular weight in the range from about 280 to 11,800 Dalton, corresponding to the following formula 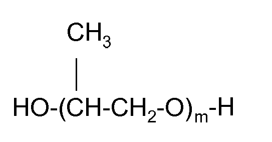 where m is an integer between 2 and 200, are particularly preferred.

The amount of the difunctional polyethers is from 0.1 to 10% of the whole polymerized mass.

The esterification reaction of polycarboxylic acid polymers and polyethers can be accomplished in many ways. In one preferred embodiment, a solution of not neutralized polycarboxylic acid of selected molecular weight in water is charged in the reaction vessel and heated under stirring with the proper amount of monofunctional and difunctional polyethers having selected molecular weight. The temperature is raised up to the set value, generally in the range from 140°C to 180°C, preferably from 150°C to 170°C, and water is distilled off. Vacuum application can help to remove water faster and more effectively, mainly during the last period of the esterification reaction. Reaction times depend on the amount of water initially present and on the desired final degree of esterification of the polycarboxylic acid. Normally, the temperature of the reaction mixture is kept at the set value of temperature from 2 to 5 hours, preferably from 3 to 4 hours. The whole reaction takes from 5 to 10 hours to be completed. At the end of the reaction, the hot reaction mixture is transferred to a second reactor where it is diluted with water and neutralized at pH values in the range from ph 6.5 to 8.5. Suitable neutralizing agents are alkaline and earth-alkaline hydroxides, such as sodium hydroxide, potassium hydroxide and calcium hydroxide, but also ammonium hydroxide and other organic bases can be used. The amount of water in the neutralization step can be varied at a large extent and the final concentration of superplasticizer solution can be in the range between 15 to 65% solid solution.

If the polycarboxylic acid polymer itself is soluble in the monofunctional and difunctional polyethers mixture, it is possible to obtain the polycarboxylic acid polymer starting from the selected monomers using the polyether mixture as a solvent. In this second preferred embodiment, acrylic and/or methacrylic acid, optionally mixed with other monomers, are added dropwise in the reaction vessel containing the monofunctional and difunctional polyethers mixture and polymerized in the presence of selected free radical initiators and, optionally, chain transfer agents to control the molecular weight of the resulting polymer. The polymerization temperature should be low enough to prevent the esterification of the carboxylic acid groups of the acrylic or methacrylic monomers or other acidic monomers optionally present in the monomer mixture. Temperature up to 70°C are suitable to polymerize the monomers without causing the esterification of the acidic monomers before they undergo the polymerization reaction. Once the whole monomer mixture has been polymerized in the solvent mixture of mono and difunctional polyethers, temperature can be raised up to the set value for the esterification, and the reaction is carried out in the same way as described in the first preferred embodiment. In this second preferred embodiment, the sharp reduction of the amount of water to be distilled off represents a clear benefit in terms of time of reaction and energy consumption.

The ratio of carboxylic groups to ester groups in the superplasticizers of the invention is between 2.5 to 15, preferably between 3 to 9.

The superplasticizers of the invention may be in liquid or powder form and they will be used to mix and disperse a cement mixture in amounts ranging from 0.01 to 3.00 per cent by weight of cement, on a dry basis.

The details of the synthesis and performance of the superplasticizers of the invention are presented in the following examples.

### Example 1

487 grams of a 50% water solution of polyacrylic acid with molecular weight of 4000 Dalton in which all the carboxylic groups are present in acidic, not neutralized form (pH 2.5), were charged in a reaction vessel equipped with thermometer, stirrer and condenser. To this solution, 3077 grams of methoxypolyethyleneglycol (MPEG) with molecular weight of 5000 Dalton and 60 grams of polypropylene glycol with a molecular weight of 900 Dalton were added under stirring and the temperature of the reaction mass was gradually increased to 165°C and kept at this temperature for 3 hours. Water produced by the esterification of polyacrylic acid by monofunctional and difunctional polyethers was continuously removed by distillation and condensed. During the last period of the esterification of polyacrylic acid, vacuum was applied in order to remove water faster and more effectively. At the end of the esterification reaction, the hot mixture was dropped in a second vessel where dilution and neutralization with 3700 grams of water and 143 grams of sodium hydroxide 30% solution were accomplished. 7467 grams of esterified polyacrylic acid polymer solution with a total solid content of 45 per cent were obtained. The final polymer had a molecular weight of 110,000 Dalton, measured by GFC (Gel Filtration Chromatography) and a ratio between free carboxylic acid groups and ester groups Rc = 4.5. The residual unreacted methoxypolyethyleneglycol (MPEG) was 5 per cent of the whole reaction mass, expressed as solid matter, confirming the excellent yield of the esterification of polyacrylic acid polymer.

### Examples 2 to 6

In these examples, different amounts of methoxypolyethyleneglycol (MPEG) of molecular weight 5000 Dalton were used, with the same reaction conditions described in Example 1. The characteristics of the final superplasticizers, including Example 1, are reported in the following Table 1.

**Table 1. Characteristics of the superplasticizers of the invention (Examples 1 - 6).**

| **Example** | **MPEG (grams)** | **Molecular weight of the final polymer (Dalton)** | **Ratio between free carboxylic groups and ester groups in the polymer (Rc)** | **Residual MPEG (%)** | **Total solids of final reaction mass (%)** |
|---|---|---|---|---|---|
| Example 1 | 3077 | 110,000 | 4.5 | 5 | 45 |
| Example 2 | 2819 | 100,000 | 5.0 | 5 | 45 |
| Example 3 | 2602 | 97,000 | 5.5 | 5 | 45 |
| Example 4 | 2416 | 93,000 | 6.0 | 4 | 45 |
| Example 5 | 2253 | 91,000 | 6.5 | 4 | 45 |
| Example 6 | 2113 | 87,000 | 7.0 | 3.5 | 45 |

The results of Examples 1 to 6 indicate that the esterification reaction of polyacrylic acid in the acidic form with methoxypolyethyleneglycol (MPEG) and polypropylene glycol proceeded smoothly and in excellent yield in the absence of strong acidic catalysts. Particularly, no anomalous increase of the viscosity of the reaction mass was observed during the reaction and the molecular weight of the final superplasticizer increased linearly with the degree of esterification (lower Rc), indicating that no anomalous crosslinking occurred by changing the reaction conditions.

In the following Comparative Examples 1, 2 and 3, the production of polycarboxylic superplasticizers produced by free radical terpolymerization of monomers according to EP 1547986 is described. In the first part of these examples (Esterification) the production of the monomer mixture consisting of a) methacrylic acid, b) polyethyleneglycolmethoxymethacrylate and c) polypropyleneglycoldimethacrylate is described, while in the second part (Polymerization) these monomers are polymerized by free radical initiator.

### Comparative Example 1

Esterification - 700 grams of methoxypolyethyleneglycol (MPEG) with molecular weight of 5000 Dalton, 14 grams of polypropylene glycol with a molecular weight of 900 Dalton, 0,26 grams of phenothiazine, 34 grams of paratoluene sulfonic acid 65% water solution and 50 grams of cyclohexane were charged and stirred, under nitrogen, in a reaction vessel equipped with thermometer, Marcusson apparatus for the separation of water and reflux condenser. While heating the mixture at 116°C, 66 grams of methacrylic acid were added under stirring. The water produced by the esterification reaction is continuously removed from the reaction mixture by the Marcusson apparatus. The reaction is stopped after 7 hours and the final reaction product was neutralized with 18 grams of a 30 per cent NaOH solution, diluted with 410 grams of water and the residual cyclohexane was removed by distillation. 1100 grams of a mixture of polyethyleneglycolmethoxymethacrylate, polypropyleneglycoldimethacrylate and methacrylic acid were obtained. The conversion of methoxypolyethyleneglycol (MPEG) to the corresponding metoxypolyethyleneglycolmethacrylate was 98 per cent, as determined by HPLC (High Performance Liquid Chromatography).

Polymerization - 405 grams of water were introduced in a reaction vessel equipped with thermometer and reflux condenser and heated at 70°C. Then, a mixture of 450 grams of the reaction product from the esterification step with 2.21 grams of methacrylic acid, 4 grams of mercaptopropionic acid (80% water solution) and 70 grams of water were added in 2 hours to the reaction vessel, under stirring and a nitrogen atmosphere. As a parallel addition, a solution of 4.3 grams of sodium persulfate in 78 grams was added in 3 hours. After cooling at 40°C, 34 grams of a 30% NaOH solution were added to the reaction vessel in order to neutralize the final product. About 1050 grams of a 30% polymer solution in water were obtained. The polymer had a weight average molecular weight of 76,000 Dalton, as measured with GFC (Gel Filtration Chromatography) and a ratio between free carboxylic acid groups and ester groups Rc = 4.5.

### Comparative Example 2

Esterification - 700 grams of methoxypolyethyleneglycol (MPEG) with molecular weight of 5000 Dalton, 14 grams of polypropylene glycol with a molecular weight of 900 Dalton, 0,26 grams of phenothiazine, 34 grams of paratoluene sulfonic acid 65% water solution and 50 grams of cyclohexane were charged and stirred, under nitrogen, in a reaction vessel equipped with thermometer, Marcusson apparatus for the separation of water and reflux condenser. While heating the mixture at 116°C, 96 grams of methacrylic acid were added under stirring. The water produced by the esterification reaction is continuously removed from the reaction mixture by the Marcusson apparatus. The reaction is stopped after 7 hours and the final reaction product was neutralized with 18 grams of a 30 per cent NaOH solution, diluted with 410 grams of water and the residual cyclohexane was removed by distillation. 1100 grams of a mixture of polyethyleneglycolmethoxymethacrylate, polypropyleneglycoldimethacrylate and methacrylic acid were obtained. The conversion of methoxypolyethyleneglycol (MPEG) to the corresponding metoxypolyethyleneglycolmethacrylate was 99 per cent, as determined by HPLC (High Performance Liquid Chromatography).

Polymerization - 405 grams of water were introduced in a reaction vessel equipped with thermometer and reflux condenser and heated at 70°C. Then, a mixture of 450 grams of the reaction product from the esterification step with 2.21 grams of methacrylic acid, 4 grams of mercaptopropionic acid (80% water solution) and 70 grams of water were added in 2 hours to the reaction vessel, under stirring and a nitrogen atmosphere. As a parallel addition, a solution of 4.3 grams of sodium persulfate in 78 grams was added in 3 hours. After cooling at 40°C, 50 grams of a 30% NaOH solution were added to the reaction vessel in order to neutralize the final product. About 1050 grams of a 30% polymer solution in water were obtained. The polymer had a weight average molecular weight of 90,000 Dalton, as measured with GFC (Gel Filtration Chromatography) and a ratio between free carboxylic acid groups and ester groups Rc = 7.0.

### Comparative Example 3

Esterification - 700 grams of methoxypolyethyleneglycol (MPEG) with molecular weight of 5000 Dalton, 14 grams of polypropylene glycol with a molecular weight of 900 Dalton, 0,26 grams of phenothiazine, 34 grams of paratoluene sulfonic acid 65% water solution and 50 grams of cyclohexane were charged and stirred, under nitrogen, in a reaction vessel equipped with thermometer, Marcusson apparatus for the separation of water and reflux condenser. While heating the mixture at 116°C, 80.6 grams of acrylic acid were added under stirring. The water produced by the esterification reaction is continuously removed from the reaction mixture by the Marcusson apparatus. The reaction is stopped after 7 hours and the final reaction product was neutralized with 18 grams of a 30 per cent NaOH solution, diluted with 410 grams of water and the residual cyclohexane was removed by distillation. 1100 grams of a mixture of polyethyleneglycolmethoxyacrylate, polypropyleneglycoldiacrylate and acrylic acid were obtained. The conversion of methoxypolyethyleneglycol (MPEG) to the corresponding metoxypolyethyleneglycolacrylate was 99 per cent, as determined by HPLC (High Performance Liquid Chromatography).

Polymerization - 405 grams of water were introduced in a reaction vessel equipped with thermometer and reflux condenser and heated at 70°C. Then, a mixture of 450 grams of the reaction product from the esterification step with 2.21 grams of acrylic acid, 4 grams of mercaptopropionic acid (80% water solution) and 70 grams of water were added in 2 hours to the reaction vessel, under stirring and a nitrogen atmosphere. As a parallel addition, a solution of 4.3 grams of sodium persulfate in 78 grams was added in 3 hours. After cooling at 40°C, 50 grams of a 30% NaOH solution were added to the reaction vessel in order to neutralize the final product. About 1050 grams of a 30% polymer solution in water were obtained. The polymer had a weight average molecular weight of 47,000 Dalton, as measured with GFC (Gel Filtration Chromatography) and a ratio between free carboxylic acid groups and ester groups Rc = 7.0.

In the following Comparative Examples 4 and 5, the reaction of polyacrylic acid with mono and difunctional polyethers in the presence of strong acidic catalyst, according to EP 088980, is described.

### Comparative Example 4

487 grams of a 50% water solution of polyacrylic acid with molecular weight of 4000 Dalton in which all the carboxylic groups are present in acidic, not neutralized form, were charged in a reaction vessel equipped with thermometer, stirrer and condenser. To this solution, 3077 grams of methoxypolyethyleneglycol (MPEG) with molecular weight of 5000 Dalton, 60 grams of polypropylene glycol with molecular weight of 900 Dalton and 18 grams of 96% sulphuric acid were added under stirring and the temperature of the reaction mass was gradually increased to 165°C. After 2 hours at this temperature, the reaction mass showed a sharp increase of the viscosity and it was necessary to stop the reaction. The resulting product was insoluble in water, indicating that the use of strong acidic catalyst produced uncontrolled side reaction which led to the crosslinking of the polymer.

### Comparative Example 5

487 grams of a 50% water solution of polyacrylic acid with molecular weight of 4000 Dalton in which the carboxylic groups were partially neutralized with sodium hydroxide (pH = 4), were charged in a reaction vessel equipped with thermometer, stirrer and condenser. To this solution, 3077 grams of methoxypolyethyleneglycol (MPEG) with a molecular weight of 5000, 60 grams of polypropyleneglycol with molecular weight of 900 and 24 grams of sulphuric acid were added under stirring and the temperature of the reaction mass was gradually increased to 180°C and kept at this temperature for 6 hours. Water produced by the esterification of polyacrylic acid by monofunctional and difunctional polyethers was continuously removed by distillation and condensed. During the last period of the esterification of polyacrylic acid, vacuum was applied in order to remove water faster and more effectively. At the end of the esterification reaction, the hot mixture was dropped in a second vessel where dilution and neutralization with 2550 grams of water and 153 grams of sodium hydroxide 30% solution were accomplished. 6351 grams of esterified polyacrylic acid polymer solution with a total solid content of 45 per cent were obtained. The final polymer had a molecular weight of 270,000 Dalton, measured by GFC (Gel Filtration Chromatography) and a theoretical ratio between free carboxylic acid groups and ester groups Rc = 4.5. The residual unreacted methoxypolyethyleneglycol (MPEG) was 8 per cent of the whole reaction mass, expressed as solid matter. This example indicates that, by using partially neutralized polyacrylic acid and strong acidic catalyst, it is necessary to use more drastic reaction conditions and longer reaction times in order to carry out the esterification reaction, in comparison to the method of the present invention. Nevertheless, even by using these stronger reaction conditions, the conversion ot methoxypolyethyleneglycol was lower than in the examples of the present invention (8 per cent in comparison with 5 per cent of Examples 4 to 9); furthermore, the molecular weight of the resulting polymer is 270,000 Dalton, much higher in comparison with 87,000 to 110,000 of the superplasticizers of the present invention (Examples 4 to 9).

### Comparative Example 6

In this example, the reaction of partially neutralized polyacrylic acid with mono and difunctional polyethers without strong acidic catalyst is described.

487 grams of a 50% water solution of polyacrylic acid with molecular weight of 4000 Dalton in which the carboxylic groups were partially neutralized with sodium hydroxide (pH = 4), were charged in a reaction vessel equipped with thermometer, stirrer and condenser. 3077 grams of methoxypolyethyleneglycol (MPEG) with a molecular weight of 5000, 60 grams of polypropyleneglycol with molecular weight of 900 were added to this solution under stirring. The temperature of the reaction mass was gradually increased, but when the temperature reached 80°C, an insoluble mass separated and it was no longer possible to carry out the reaction. This example demonstrated that it was not possible to carry out the esterification of a partially neutralized polyacrylic acid with methoxypolyethyleneglycol (MPEG) and polypropyleneglycol without using a strong acidic catalyst.

Comparative Examples 4, 5 and 6 clearly demonstrated that by using strong acidic catalysts and/or polycarboxylic polymers in which the carboxylic groups are partially neutralized, the esterification of polyacrylic acid by methoxypolyethyleneglycol and polypropyleneglycol did not proceed smoothly and in high yield and gave final products characterized by anomalous high viscosity. Even though the reasons of these behaviours are beyond the scope of the present invention, it is believed that the presence of strong acidic catalysts, such as sulphuric acid, promotes the formation of diols in the polyoxyethylene chains of methoxypolyethyleneglycol and polypropyleneglycol, creating reactive sites which cause the crosslinking of the polymer chains and the gelling of the reaction mass.

### Comparative Example 7

This example refers to the synthesis of superplasticizer without using polypropyleneglycol.

487 grams of a 50% water solution of polyacrylic acid with molecular weight of 4000 Dalton in which all the carboxylic groups are present in acidic, not neutralized form (pH 2.5), were charged in a reaction vessel equipped with thermometer, stirrer and condenser. To this solution, 3410 grams of methoxypolyethyleneglycol (MPEG) with molecular weight of 5000 Dalton were added under stirring and the temperature of the reaction mass was gradually increased to 165°C and kept at this temperature for 3 hours. Water produced by the esterification of polyacrylic acid by monofunctional and difunctional polyethers was continuously removed by distillation and condensed. During the last period of the esterification of polyacrylic acid, vacuum was applied in order to remove water faster and more effectively. At the end of the esterification reaction, the hot mixture was dropped in a second vessel where dilution and neutralization with 3700 grams of water and 143 grams of sodium hydroxide 30% solution were accomplished. 7467 grams of esterified polyacrylic acid polymer solution with a total solid content of 45 per cent were obtained. The final polymer had a molecular weight of 100,000 Dalton, measured by GFC (Gel Filtration Chromatography) and a ratio between free carboxylic acid groups and ester groups Rc = 4.5. The residual unreacted methoxypolyethyleneglycol (MPEG) was 5 per cent of the whole reaction mass, expressed as solid matter, confirming the excellent yield of the esterification of polyacrylic acid polymer.

### Example 7

The results of mortar tests using the superplasticizers of the invention (Examples 1 to 6), and those of prior art prepared according to Comparative Examples 1, 2 and 5 are shown in Table 2. The different cement mixtures were prepared according to ENV 196/1 method at the same water to cement ratio W/C = 0.42, normalized sand to cement ratio S/C = 3, by using CEM I 52.5R Portland cement. The efficiency of the superplasticizers of the invention in terms of maintenance of the workability was evaluated according to UNI 7044 method, by measuring the flow of fresh mortars at different periods of time from mixing (drop test). The early age mechanical strength development was measured after 5, 6 and 7 hours of curing at 20°C and 95% relative humidity in plastic prismatic moulds (40 x 40 x 160 mm).

**Table 2. Mortar tests using superplasticizers of the invention (Examples 1 to 6) in comparison with prior art superplasticizers (Comparative Examples 1, 2 and 5).**

| **SUPERPLASTICIZER** | **Dosage % (active matter by weight of cement)** | **FLOW - Drop Test (%)** | | **COMPRESSIVE STRENGTH (N/mm²)** | | |
|---|---|---|---|---|---|---|
| | | **Time from mixing (minutes)** | | **Time of curing (hours)** | | |
| | | 0 | 30 | 5 | 6 | 7 |
| Example 1 | 0.25 | 134 | 113 | 1.42 | 2.70 | 4.40 |
| Example 2 | 0.25 | 125 | 105 | 1.55 | 2.50 | 4.00 |
| Example 3 | 0.25 | 134 | 107 | 1.45 | 2.70 | 4.38 |
| Example 4 | 0.25 | 130 | 89 | 1.60 | 2.98 | 5.00 |
| Example 5 | 0.25 | 143 | 108 | 1.60 | 2.85 | 5.10 |
| Example 6 | 0.25 | 145 | 115 | 1.50 | 3.10 | 4.60 |
| Comparative Example 1 | 0.25 | 135 | 84 | 0.95 | 1.66 | 2.73 |
| Comparative Example 2 | 0.25 | 94 | 70 | 0.98 | 1.64 | 2.75 |
| Comparative Example 5 | 0.25 | 110 | 75 | 1.07 | 1.83 | 3.12 |

This example shows that the superplasticizers of the invention are definitely superior in comparison with those of the prior art in promoting the development of early mechanical strength. In fact, the mechanical strength of the superplasticizers of the invention are, on average, 57, 70 and 67% higher in comparison with the superplasticizers of the prior art, after 5, 6 and 7 hours of curing at 20°C, respectively. Furthermore, the superplasticizers of the invention show excellent fluidifying effect and are superior in terms of retention of the workability over the time in comparison with the superplasticizers of the prior art.

### Example 8

In this example, the superplasticizer of the invention (Example 6) was compared in concrete test with a superplasticizer of prior art (Comparative Example 2); both superplasticizers are characterized by the same ratio of carboxylic to ester groups in the polymer (Rc = 7) and comparable weight average molecular weight.

**Table 3. Concrete tests using the superplasticizer of the invention (Example 6) in comparison with prior art superplasticizer (Comparative Example 2).**

| | |
|---|---|
| Type of cement: | CEM I 42.5 R |
| Dosage of cement: | 450 kg/m³ |
| Coarse aggregate max diameter: | 20 mm |

| **SUPERPLASTICIZER** | **DOSAGE** (**%)** | **AIR CONTENT (%)** | **W/C** | **SLUMP (mm)** | | **CURING TEMP (°C)** | **COMPRSSIVE STRENGTH (N/mm²)** | |
|---|---|---|---|---|---|---|---|---|
| | | | | **0 min** | **30 min** | | **6 hours** | **8 hours** |
| Example 6 | 0.20 | 1.4 | 0.40 | 235 | 155 | 20 | 1.1 | 3.6 |
| | | | | | | 30 | 6.5 | 20.4 |
| Comparative Example 2 | 0.20 | 2.4 | 0.41 | 220 | 140 | 20 | n.d. | 1.1 |
| | | | | | | 30 | 1.7 | 12.5 |

| | | | | | | | | |
|---|---|---|---|---|---|---|---|---|
| n.d.: not demouldable | | | | | | | | |

The results confirm that superplasticizers of the invention are superior in promoting the early strength development in comparison with the superplasticizers of the prior art. Particularly, with the superplasticizer of the invention (Example 6), it was possible to remove the forms of the concrete specimens just after 6 hours of curing at 20°C, while the corresponding specimens prepared with the superplasticizer of the prior art (Comparative Example 2) were not demouldable. At the same time of curing, specimens prepared with the superplasticizer of the invention of Example 6 had compressive strength about 4 times higher in comparison with the corresponding specimens made with superplasticizer of Comparative Example 2. Furthermore, the superplasticizers of the invention are characterized by intrinsic low air-entraining effect and good maintenance of the workability, as measured by air content of the fresh mixtures and the slump test after 30 minutes from mixing.

### Example 9

In this example, the superplasticizer of the invention (Example 1) has been compared in mortar test with superplasticizer of Comparative Example 7, obtained with similar procedure as the superplasticizer of Example 1, but without the addition of polypropylene glycol of molecular weight of 900 Dalton. Both superplasticizers are characterized by the same ratio of carboxylic to ester groups in the polymer (Rc = 4.5) and comparable weight average molecular weight. Same conditions of Example 7 were used for the preparation of mortars.

**Table 4. Mortar tests using superplasticizers of the invention (Example 1) and Comparative Example 8.**

| **SUPERPLASTICIZER** | **AIR CONTENT %** | **FLOW - Drop Test** (%) | | **COMPRESSIVE STRENGTH (N/mm²)** | | |
|---|---|---|---|---|---|---|
| | | **Time from mixing (minutes)** | | **Time of curing (hours)** | | |
| | | 0 | 30 | 5 | 6 | 7 |
| Example 1 | 8 | 138 | 120 | 1.85 | 3.6 | 6.22 |
| Comparative Example 8 | 18 | 140 | 130 | 1.2 | 2.73 | 4.27 |

The results of Table 4 clearly show that the addition of polypropyleneglycol is essential to reduce the amount of entrained air and that the air entrainment has a negative effect on mechanical strength.

## Claims

1. Superplasticizer for concrete and other cement mixtures, which is intrinsically low-foaming, promotes the early mechanical strength development and retains the workability of fresh concrete for longer time, obtainable by reacting acid, not neutralized, polycarboxylic polymers with monofunctional polyethers and difunctional polyethers in the absence of strong acidic catalysts.

2. Superplasticizer according to claim 1, wherein the polycarboxylic polymers are independently polyacrylic acid, polymethacrylic acid, copolymers between acrylic and methacrylic acid and their mixtures.

3. Superplasticizer according to claims 1 and 2, wherein the molecular weight of the polycarboxylic polymer is between 1,000 to 20,000 Dalton.

4. Superplasticizer according to any of the claims 1 to 3, wherein the monofunctional polyethers are polyethyleneglycolmonomethylethers of molecular weight from about 2,000 to about 13,200 Dalton.

5. Superplasticizer according to any of the claims 1 to 4, wherein the difunctional polyethers are polypropyleneglycols of molecular weight from about 280 to about 11,800 Dalton and wherein the amount of the difunctional polyethers is from 0.1 to 10% of the whole polymerized mass.

6. Superplasticizer according to any of the claims 1 to 5, wherein the ratio of carboxylic groups to ester groups is between 2.5 to 15.

7. Superplasticizer according to any of the claims 1 to 6, wherein the ratio of carboxylic groups to ester groups is between 3 to 9.

8. A cement composition comprising cement, aggregates and the superplasticizer as defined in any of the claims 1 to 7.

9. A cement composition according to claim 8 containing from 0.01 to 3.00 per cent by weight of cement, on a dry basis, of the superplasticizer as defined in any of the claims 1 to 7.

10. Use of the superplasticizer of the claims 1 to 7 to mix and disperse a cement mixture.

11. Use of the superplasticizer of the claims 1 to 7 in liquid or powder form.
